# EUROPEAN PATENT APPLICATION

(11) **EP 4 837 845 A1**
(43) Date of publication of application: **11.11.2026**
(21) Application number: 26167014.5
(22) Date of filing: 24.03.2026
(51) Int. Cl.: B65B 9/00

(54) **A METHOD AND A MACHINE FOR THE PRODUCTION OF SINGLE-DOSE CAPSULES**

(30) Priority: 07.05.2025 IT 202500010185
(71) Applicant: Fameccanica.Data S.p.A., 66020 San Giovanni Teatino (CH) (IT)
(72) Inventor: PATRIGNANI, Marco, I-66020 San Giovanni Teatino (Chieti) (IT); PIERGUIDI, Fabio, I-66020 San Giovanni Teatino (Chieti) (IT); ANGELOSANTE, Costantino, I-66020 San Giovanni Teatino (Chieti) (IT)
(74) Representative: Buzzi, Notaro & Antonielli d'Oulx S.p.A.

(57) **Abstract**

A method for the production of single-dose capsules which provides for applying a water-soluble film (26) onto plates (18) to form recesses (82) in correspondence with cavities (22) of the plates (18), transversely cutting the film (26) into separate sections (84) and dosing a composition (36) into the formed recesses (82).

## Description

### Field of the invention

The present invention relates to the production of single-dose capsules.

In particular, the invention concerns a method and a machine for the production of single-dose capsules with one or more compartments.

The invention was developed in particular for the production of single-dose capsules for household appliances such as, for example, single-dose capsules containing laundry detergents, dishwasher detergents, fabric softeners and the like.

In the following description reference will be made to this field but it is understood that the invention is not limited to this specific use.

### Prior art

Single-dose capsules, generally consisting of water-soluble sachets, are widely used in household cleaning. These capsules are obtained through a process involving the formation of recesses on a first continuous water-soluble film, their filling with liquid compositions and the subsequent sealing by applying a second continuous water-soluble film.

The first water-soluble film, usually made of polyvinyl acetate (PVA), is heated and molded into cavities defining the compartments intended to contain the compositions. The produced capsules are typically joined in continuous mats, organized in longitudinal and transverse rows, subsequently cut to form individual capsules.

Examples of machines for the production of single-dose capsules are described in the following documents: EP-A-4406862, EP-A-4079649, US-A-2023/0415367.

Single-dose capsules comprising two or more compartments containing compositions different from each other are very common on the market. The different compositions can have characteristics optimized according to the type of use. The different compositions often have different colors and are housed in compartments with different shapes in order to give the single-dose capsules an aesthetically pleasing appearance and meet marketing needs.

Multi-compartment single-dose capsules can be of the side-by-side type, in which the compartments of the single-dose capsule are set side-by-side, and superposed, in which the compartments of the capsule are superimposed on each other.

For the production of superposed single-dose capsules, a third water-soluble film is used to separate two or more superimposed compartments from each other.

In machines for the production of single-dose capsules, the dosing units that dispense the compositions into the forming cavities are often movable to follow the forming cavities during the dispensing phases. Often the dosing units are movable with an intermittent alternating motion between a start-of-dosing position and an end-of-dosing position.

The production speed of single-dose capsules depends on the advancement speed of the forming cavities, which is strictly linked to the operation of the dosing units.

The alternating and intermittent motion of the dosing units introduces operational limitations that prevent increasing the machine speed.

In fact, the alternating motion of the dosing units implies continuous cycles of acceleration, deceleration and stop. At high speeds, inertial forces increase significantly, causing potential vibrations or instability that can reduce the reliability and lifespan of the machine.

Furthermore, for the same stroke, the time available for dosing decreases proportionally to the increase in the advancement speed of the cavities. This makes it more difficult to ensure that each cavity receives the correct amount of composition, with the risk of qualitative variations in the final product.

US11878829 discloses a machine for the production of single-dose capsules that uses linear motors and independent forming plates. The plates in which the forming cavities are formed are not mechanically connected to each other. This configuration allows accelerating or decelerating the forming plates independently, adapting the speeds in the different phases of the process. For example, critical phases such as filling are performed at reduced speed, while the return to the initial phase occurs at higher speed.

The main problem of US-A-11878829 lies in the fact that during the capsule forming phase the first and second water-soluble films are continuous.

The continuous nature of the films creates a physical connection between the plates, which prevents the possibility of controlling the advancement speed of the individual plates independently during the capsule forming phase.

This configuration implies that all the forming plates during the formation of the single-dose capsules are constrained to advance at the same speed.

Consequently, even if the forming plates independent from each other offer flexibility in terms of movement and speed, this flexibility is compromised by the presence of continuous films, which act as a mechanical constraint.

This means that, during the forming phase, all plates must proceed in synchrony, limiting the possibility of optimizing processing times based on the specific needs of each station. For example, it is not possible to slow down a plate to increase the time available for filling or for sealing, without simultaneously slowing down the entire production process.

This represents a significant limitation to improving production efficiency and optimizing the individual processing stages, as it prevents the implementation of differentiated speeds to maximize productivity and ensure optimal quality in the various stages of single-dose capsule production.

### Object and summary of the invention

The object of the present invention is to provide a method and a machine for the production of single-dose capsules that overcome the problems of the prior art.

According to the present invention this object is achieved by a method having the features forming the subject of claim 1 and by a machine having the features of claim 5.

Preferred embodiments form the subject of the dependent claims.

### Brief description of the drawings

The invention will now be described in detail with reference to the accompanying drawings, given by way of non-limiting example only, in which:
- Figure 1 is a schematic side view of a first embodiment of a machine for the production of single-dose capsules according to the present invention,
- Figure 2 is a schematic side view of a second embodiment of a machine for the production of single-dose capsules according to the present invention,
- Figure 3 is a schematic perspective view of the part indicated by arrow III in figure 1,
- Figure 4 is a schematic cross-section illustrating a semi-capsule, and
- Figure 5 is a schematic cross-section illustrating a complete capsule.

It will be appreciated that the various figures may not be drawn to the same scale. It will further be appreciated that some elements or components may not be illustrated in order to make other elements more clearly visible and to simplify understanding of the figures.

### Detailed description

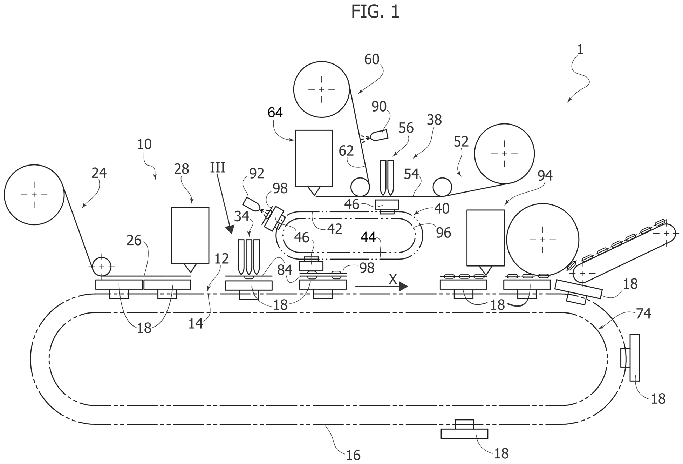

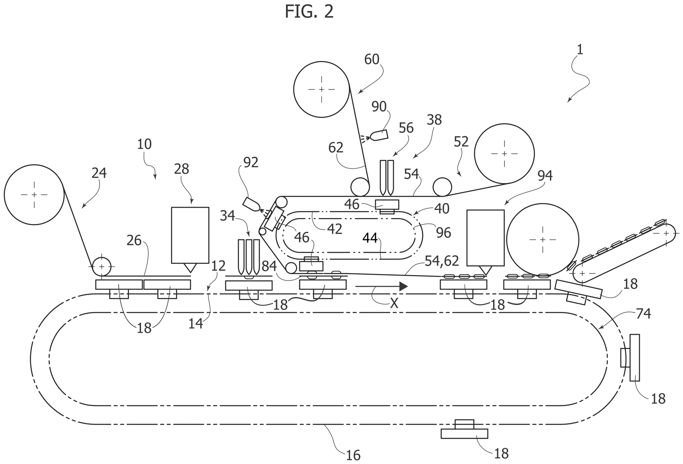

With reference to figures 1 and 2, 1 indicates a machine for the production of single-dose capsules.

The machine 1 comprises a first forming unit 10. The first forming unit 10 includes a first closed-loop guide 12 having a forming section 14 and a return section 16.

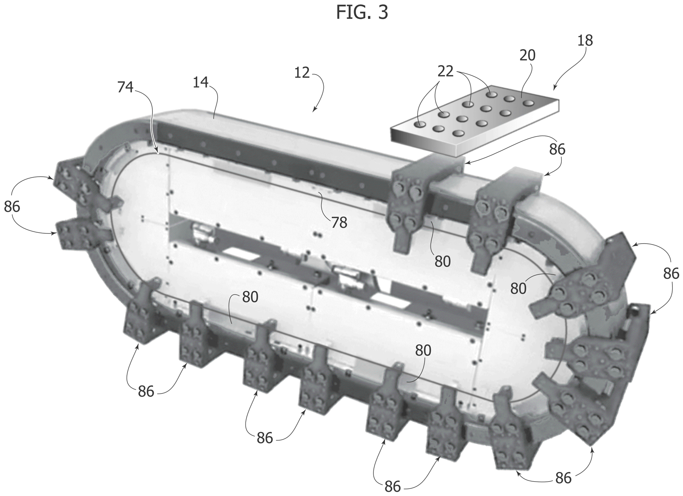

The first forming unit 10 comprises a plurality of first forming plates 18 movable independently from one another along the first closed-loop guide 12 in a machine direction X. With reference to figure 3, each of the first forming plates 18 has a surface 20 on which at least one transverse row of first cavities 22 is arranged. In possible embodiments, each of the first forming plates 18 may have a plurality of transverse rows of first cavities 22 on the surface 20.

The first forming unit 10 comprises a first feeding device 24 configured to apply a first water-soluble film 26 onto the surfaces 20 of the first forming plates 18 while these are along the forming section 14.

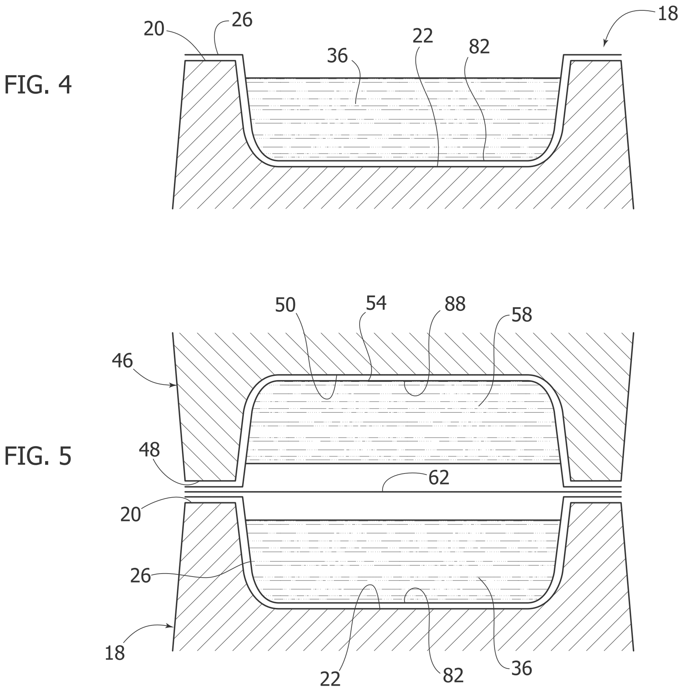

With reference to figure 4, when the first water-soluble film 26 is applied onto the surfaces 20 of the first forming plates 18 it deforms in correspondence with the first cavities 22 so as to form first recesses 82. The first forming unit 10 may comprise a heating system configured to heat the first water-soluble film 26 to facilitate the deformation of the first water-soluble film 26 into the first cavities 22. The first forming unit 10 is provided with a suction system configured to generate suction in the first cavities 22 so as to deform the first water-soluble film 26 into the first cavities 22 and keep the first recesses 82 in contact with the surfaces of the first cavities 22.

The first forming unit 10 comprises a first cutting unit 28 disposed downstream of the first feeding device 24 with reference to the machine direction X. The first cutting unit 28 is configured to perform successive transverse cuts of the first water-soluble film 26 applied onto the forming plates 18.

The first cutting unit 28 is configured to perform a cut line between successive forming plates 18. This cut allows separating the first water-soluble film 26 into distinct sections 84 separated from each other and associated with the respective forming plates 18. In this way, the first forming plates 18 can be moved with speeds and accelerations different from each other along the forming section 14 of the first closed-loop guide 12.

The first forming unit 10 comprises a first dosing unit 34 disposed downstream of the first cutting unit 28 with reference to the machine direction X. The first dosing unit 34 is configured to dispense dosed quantities of at least a first composition 36 (figure 4) in correspondence with the first cavities 22 so as to fill the first recesses 82 formed in the distinct sections 84 associated with the first forming plates 18 with dosed quantities of at least a first composition 36.

With reference to figure 3, in a possible embodiment the first forming unit 10 may comprise a first linear motor 74 configured to advance the first forming plates 18 along the first closed-loop guide 12. The first linear motor 74 may comprise a plurality of carriages 86 movable along the first closed-loop guide 12, to which respective first forming plates 18 are fixed. The first linear motor 74 may comprise a stator 78 fixed relative to the first closed-loop guide 12 and a plurality of movers 80 fixed to respective carriages 86 and actuated by the stator 78 to advance the carriages 86 independently.

With reference to figures 1 and 2, the machine 1 may comprise a second forming unit 38, configured to operate in a synchronized manner relative to the first forming unit 10. The second forming unit 38 includes a second closed-loop guide 40, which has a forming section 42 and an application section 44.

The second forming unit 38 comprises a plurality of second forming plates 46 movable independently from each other along the second closed-loop guide 40. Each of the second forming plates 46 has a respective surface 48 provided with at least one transverse row of second cavities 50.

During operation, the second cavities 50 of the second forming plates 46 that are along the application section 44 of the second guide are superimposed onto the corresponding first cavities 22 of the first forming plates 18, which are along the forming section 14 of the first closed-loop guide 12.

The movement of the second forming plates 46 along the second guide can be commanded by a second linear motor 96 controlled in a synchronized manner with the first linear motor 74.

The second forming unit 38 comprises a second feeding device 52 configured to apply a second water-soluble film 54 onto the surfaces 48 of the second forming plates 46 while these are along the forming section 42 of the second guide.

With reference to figure 5, when the second water-soluble film 54 is applied onto the surfaces 48 of the second forming plates 46 it deforms in correspondence with the second cavities 50 so as to form second recesses 88. The second forming unit 38 may also comprise a heating system configured to heat the second water-soluble film 54 to facilitate the deformation of the second water-soluble film 54 into the second cavities 50. The second forming unit 38 may also be provided with a suction system configured to generate suction in the second cavities 50 so as to deform the second water-soluble film 54 into the second cavities 50 and keep the second recesses 88 in contact with the surfaces of the second cavities 50.

Downstream of the second feeding device 52, a second dosing unit 56 is positioned, configured to dispense dosed quantities of at least a second composition 58 (figure 5) into the second recesses 88 located in correspondence with the second cavities 50 of the second forming plates 46.

Subsequently, a third feeding device 60 is configured to apply a third water-soluble film 62 onto the second water-soluble film 54 applied onto the surfaces 48 of the second forming plates 46 downstream of the second dosing unit 56.

A first humidifying device 90 applies a layer of water onto the surface of the third water-soluble film 62 that will come into contact with the second water-soluble film 54 so that the second and the third water-soluble films 54, 62 are sealed together by water. The second and the third water-soluble films 54, 62 enclose, for each of the second forming plates 46, at least one transverse row of second recesses 88 filled with at least a second composition 58.

With reference to figure 1, in a first embodiment, the second forming unit 38 comprises a second cutting unit 64 configured to perform successive transverse cuts of the second water-soluble film 54 and the third water-soluble film 62 applied onto the second forming plates 46.

The second cutting unit 64 is configured to perform a cut between successive second forming plates 46 along the forming section 42 of the second guide. This cut allows separating the second water-soluble film 54 and the third water-soluble film 62 into distinct sections 98 separated from each other, associated with the respective second forming plates 46. In this way, the second forming plates 46 can be moved with speeds and accelerations different from each other along the application section 44 of the second guide.

A second humidifying device 92 situated downstream of the second cutting unit 64 applies a layer of water onto the surface of the third water-soluble film 62 that will come into contact with the first water-soluble film 26, so that the third water-soluble film 62 and the first water-soluble film 26 are sealed together by water. To obtain the sealing of the films, it is necessary that a pressure is created between the parts pressing the films into contact with each other.

With reference to figure 2, in a second embodiment, the second forming unit 38 is configured to transport, by means of the second forming plates 46, the second water-soluble film 54 and the third water-soluble film 62 along the application section 44 of the second guide without these films being previously cut transversely.

In this second embodiment, the transverse rows of second recesses 88 filled with at least a second composition 58 are enclosed between the second and the third water-soluble films 54, 62 at the moment they are superimposed onto the transverse rows of first recesses 88 transported by the first forming plates 18. In this second embodiment, the second cutting unit 64 is placed downstream of said superposition zone.

Also in this second embodiment, a first humidifying device 90 and a second humidifying device 92 are provided to seal by water the first, the second and the third water-soluble films 26, 54, 62 together.

In both embodiments, the machine 1 may comprise a third cutting unit 94 situated downstream of the second forming unit 38 to individualize the single-dose capsules.

In operation, the previously described machine 1 implements a method for the production of single-dose capsules comprising:
- guiding a plurality of first forming plates 18 along a first closed-loop guide 12 having a forming section 14 and a return section 16, wherein the first forming plates 18 are movable independently from each other along the first closed-loop guide 12 and each has a respective surface 20 with at least one transverse row of first cavities 22 on said surface 20,
- applying a first water-soluble film 26 onto the surfaces 20 of the first forming plates 18 while these are along the forming section 14 of the first closed-loop guide 12 and forming first recesses in the first water-soluble film 26 in correspondence with the first cavities 22,
- transversely cutting the first water-soluble film 26 along a cut line, so as to separate a section 84 of the first water-soluble film 26 from said first water-soluble film 26, wherein said section 84 of the first water-soluble film 26 is placed on a surface 20 of one of said first plates 18 and
- dispensing dosed quantities of at least one composition 36 into the first recesses of said sections 84 of the first water-soluble film 26 in the forming section 14 of the first guide 12.

The method comprises:
- guiding a plurality of second forming plates 46 along a second guide having a forming section 42 and an application section 44, wherein the second forming plates 46 are movable independently from each other along the second guide and each has a respective surface 48 with at least one transverse row of second cavities 50;
- applying a second water-soluble film 54 onto the surfaces 48 of the second plates 46 while these are along the forming section 42 of the second guide 40 and forming second recesses 88 in the second water-soluble film 54 in correspondence with said second cavities 50,

- dispensing dosed quantities of at least a second composition 58 into the recesses 88 of the second water-soluble film 54 in the forming section 42 of the second guide,
- applying a third water-soluble film 62 onto the second water-soluble film 54 downstream of the dispensing of said second composition 58, and
- along the application section 44 of the second guide, superimposing the second recesses 88 carried by the second forming plates 46 onto the first recesses 82 carried by the first forming plates 18 in a superposition zone wherein both the application section 44 of the second guide 40 and the forming section 14 of the first guide 12 are present.

In a possible embodiment the method may comprise transversely cutting the second water-soluble film 54 and the third water-soluble film 62 between successive second plates 46 moving along the forming section 42 of the second guide so that said second forming plates 46 have respective separate sections 98 of the second film 54 and the third film 62 which enclose at least one transverse row of second recesses 88 filled with at least a second composition 58.

In a possible embodiment the method may comprise transporting, by means of said second forming plates 46, the second water-soluble film 54 and the third water-soluble film 62 which enclose a plurality of transverse rows of second recesses 88 filled with at least a second composition 58 along the application section 44 of the second guide.

In a possible embodiment the method may provide for advancing the first forming plates 18 along the first closed-loop guide 12 by means of a first linear motor 74 and advancing the second forming plates 46 along the second guide by means of a second linear motor 96.

Thanks to the independent movement of the forming plates 18, 46 along the closed-loop guides 12, 40, made possible by the absence of physical constraints between the forming plates 18, 46, it is possible to optimize the processing times in each phase, increasing the overall speed of the machine. In particular, during the dispensing of the compositions, the forming plates 18, 46 can be slowed down to ensure that each cavity receives the correct amount of product without losses or errors. This is particularly useful for fluid compositions that require precise dosing. At the end of the critical phases, the forming plates 18, 46 can be accelerated, reducing the transit times between stations or along the return section 16, 44. This approach reduces dead times in the production cycle, increasing the production capacity of the machine.

The possibility of dynamically adjusting the speed of the forming plates 18, 46 allows increasing the hourly production without compromising product quality. This results in a more efficient machine, capable of responding to high production demands or managing more complex compositions without structural modifications. Furthermore, independent control minimizes the risks of malfunctions due to uniform speeds unsuitable for all phases of the process. For example, a slowdown in the filling and sealing phases ensures accurate application of the films 26, 54, 62 and the compositions, reducing waste.

The use of a reduced number of forming plates allows simplifying system management and reducing the footprint and mechanical complexity. This is possible thanks to the independent movement of the plates along the closed-loop guides, which allows optimizing the use of each plate according to the needs of the production cycle, without the need to maintain a large number of plates in continuous rotation.

The machine is equipped with a compact secondary ring, namely the second guide, which can be designed with reduced dimensions compared to traditional solutions.

Finally, the configuration of the machine allows performing dosing at zero speed, i.e., with the plates stationary during the composition dispensing phase. This approach allows obtaining greater precision in dosing the products inside the cavities, reducing the risk of smearing, waste, or filling errors, particularly with complex, fluid, or multi-component compositions.

Overall, these advantages translate into a more efficient, compact, versatile machine, suitable for meeting high production requirements without sacrificing the quality of the finished product.

Naturally, the principle of the invention remaining the same, the construction details and embodiments may be widely varied with respect to what has been described and illustrated, without thereby departing from the scope of the invention as defined by the claims that follow.

## Claims

1. A method for the production of single-dose capsules, comprising:
- guiding a plurality of first forming plates (18) along a first guide (12) having a forming section (14), wherein the first forming plates (18) are movable independently from each other along the first guide (12) and each has a respective surface (20) with at least one row of first cavities (22),
- applying a first water-soluble film (26) onto at least two surfaces (20) of two adjacent first forming plates (18) while these are along the forming section (14) of the first guide (12) and forming first recesses (82) in the first water-soluble film (26) in correspondence with said first cavities (22),
- transversely cutting the first water-soluble film (26) along a cut line so as to separate a section (84) of the first water-soluble film (26) from said first water-soluble film (26), wherein said section (84) of the first water-soluble film (26) is placed on a surface (20) of one of said first plates (18),
- dispensing dosed quantities of at least a first composition (36) into the first recesses (82) of said sections (84) of the first water-soluble film (26) in the forming section (14) of the first guide (12),
- guiding a plurality of second forming plates (46) along a second guide (40) having a forming section (42) and an application section (44), wherein the second forming plates (46) are movable independently from each other along the second guide (40) and each has a respective surface (48) with at least one row of second cavities (50),
- applying a second water-soluble film (54) onto the surfaces (48) of at least two adjacent second forming plates (46) while these are along the forming section (42) of the second guide (40) and forming second recesses (88) in the second water-soluble film (54) in correspondence with said second cavities (50),
- dispensing dosed quantities of at least a second composition (58) into the second recesses (88) of the second water-soluble film (54) in the forming section (42) of the second guide (40),
- applying a third water-soluble film (62) onto the second water-soluble film (54) downstream of the dispensing of said second composition (58), and
- superimposing the second recesses (88) carried by the second forming plates (46) onto the first recesses (82) carried by the first forming plates (18) in a superposition zone wherein both the application section (44) of the second guide (40) and the forming section (14) of the first guide (12) are present.

2. A method according to claim 1, comprising transversely cutting the second water-soluble film (54) and the third water-soluble film (62) between successive second forming plates (46) along the forming section (42) of the second guide (40).

3. A method according to claim 1, comprising transversely cutting the second water-soluble film (54) and the third water-soluble film (62) between successive first forming plates (18) after having superimposed the second recesses (88) onto the first recesses (82).

4. A method according to any one of the preceding claims, comprising advancing the first forming plates (18) along the first guide (12) by means of a first linear motor (74) and advancing the second forming plates (46) along the second guide (40) by means of a second linear motor (96) controlled in a synchronized manner with the first linear motor (74).

5. A machine for the production of single-dose capsules, comprising:
- a first guide (12) having a forming section (14),
- a plurality of first forming plates (18) movable independently from each other along the first guide (12) and each having a respective surface (20) and at least one transverse row of first cavities (22) on the respective surface (20),
- a first feeding device (24) configured to apply a first water-soluble film (26) onto the surfaces (20) of the first plates (18) while these are along the forming section (14) of the first guide (12),
- a first cutting unit (28) configured to transversely cut the first water-soluble film (26) along a cut line so as to separate a section (84) of the first water-soluble film (26) from said first water-soluble film (26), wherein said section (84) of the first water-soluble film (26) is placed on a surface (20) of one of said first plates (18),
- a first dosing unit (34) situated downstream of the first cutting unit (28) and configured to dispense dosed quantities of at least a first composition (36) in correspondence with said first cavities (22),
- a second guide (40) having a forming section (42) and an application section (44),
- a plurality of second forming plates (46) movable independently from each other along the second guide (40) and each having a respective surface (48) and at least one transverse row of second cavities (50) on the respective surface (48), wherein, in a superposition zone wherein both the application section (44) of the second guide (40) and the forming section (14) of the first guide (12) are present, the second cavities (50) of the second plates (46) are superimposed onto corresponding first cavities (22) of the first plates (18),
- a second feeding device (52) configured to apply a second water-soluble film (54) onto the surfaces (48) of the second forming plates (46) while these are along the forming section (42) of the second guide (40),
- a third feeding device (60) configured to apply a third water-soluble film (62) onto the surfaces (48) of the second forming plates (46) downstream of the second dosing unit (56).

6. A machine according to claim 5, comprising a second cutting unit (64) configured to transversely cut the second water-soluble film (54) and the third water-soluble film (62) applied onto each of the second forming plates (46), wherein said second cutting unit (64) is placed along the forming section (42) of the second guide (40).

7. A machine according to claim 5, comprising a second cutting unit (64) configured to transversely cut the second water-soluble film (54) and the third water-soluble film (62) applied onto each of the second forming plates (46), wherein said second cutting unit (64) is placed downstream of said superposition zone.

8. A machine according to any one of claims 5-7, comprising a first linear motor (74) configured to advance the first forming plates (18) along the first guide (12) and a second linear motor (96) controlled in a synchronized manner with the first linear motor (74) and configured to advance the second forming plates (46) along the second guide (40).
